# EUROPEAN PATENT SPECIFICATION

(11) **EP 1 879 134 B1**
(45) Date of publication and mention of the grant of the patent: **17.12.2008**
(21) Application number: 06117104.7
(22) Date of filing: 13.07.2006
(51) Int. Cl.: G06K 19/00, H04L 12/28

(54) **Smart card communication routing**
Verkehrslenkung für die Kommunikation mit Chipkarten
Routage pour la communication avec des cartes à puce

(43) Date of publication of application: 16.01.2008
(73) Proprietor: Research In Motion Limited, Waterloo, Ontario N2L 3W8 (CA)
(72) Inventor: McCallum, Michael, Kitchener Ontario N2A 4B8 (CA); Adams, Neil, Waterloo Ontario N2K 4E4 (CA)
(74) Representative: Rickard, David John

(56) References cited:
- EP-A- 1 713 205
- WO-A-03/092264
- WO-A-20/04012352

## Description

Smart Cards (SC) are widely used in conjunction with security measures such as authentication and encryption. For example, in order to access a computing device and to access information by way of the computing device, one may have to couple a smart card to the computing device. Access to the computing device and to information may be granted following a successful interaction between the computing device and the smart card. The interaction may involve user input.

A smart card reader (SCR) is a device that can communicate with both the SC and the computing device and can therefore be used to couple them. The SCR may include one or more driver applications to communicate with the SC and with the computing device.

A process in the computing device that needs to communicate with the SC can usually do so by way of a Cryptographic Service Provider (CSP) application, or a smart card driver, in the computing device. The process sends a request to the CSP which generates the appropriate command to be passed to the SC. The CSP then sends the command to the SCR that in turn passes it to the SC. The SC may generate a response and pass the response to the SCR. The SCR sends the response to the computing device and it is received by the CSP. The CSP then passes the response to the process from which the command originated.

Some smart card readers are designed to be permanently installed inside a computing device such as a desktop computer. Other smart card readers, for example, those in the form factor of a PCMCIA (Personal Computer Memory Card International Association) card, are designed to be easily installable and removable at an appropriate bay in a mobile computing device such as a laptop computer. Other smart card readers are designed to connect to a computing device via an electrical cable.

In these three examples, the SCR is mechanically and electrically coupled to the computing device. However, smart card readers that are mechanically disconnected from the computing device and can communicate with the computing device using wireless communication are known. Since a wireless smart card reader does not require mechanical coupling to the computing device, it can in principle maintain parallel communication sessions with two or more computing devices via the wireless communication.

In a common scenario, a single SC is coupled to a single SCR that is in turn coupled to a single computing device. The CSP may maintain a continuous open communication with the SCR and over this communication it may maintain a continuous open communication session with the SC.

In another scenario, two or more computing devices may be able to maintain communication with a single SCR and to attempt to share the services of a single SC that is coupled to the smart card reader. The secure nature of the SC requires that only one session between the SC and a computing device be open at any given time. Once one computing device establishes a communication session with the SC, other computing devices may not be able to access the SC until this session is terminated. Consequently, operations in the other computing device that require the use of the SC cannot be performed timely.

WO2004/012352 discloses a wireless mobile device that is adapted to access a wireless network and includes a subscriber identification module (SIM) card slot and a contactless smart card module electrically connected to the SIM card slot and thereby to the wireless mobile device. The contactless smart card module is adapted to receive and read information stored in a contactless smart card and transmit this information to an entity through the wireless mobile device and the wireless network. The wireless mobile device of WO2004/012352 is used to conduct financial transactions using the contactless smart card. The financial transactions include face-to-face or remote purchases, payment with electronic cash stored in the contactless smart card, or payment with the contactless smart card through a financial institution, and downloading and storing of digital goods or services in the contactless smart card.

EP1713205, published after the filing date of this application, discloses a system that includes a wireless-enabled smart card reader able to be connected concurrently to at least two devices and a mobile device able to be connected wirelessly to the smart card reader and to control connections of the smart card reader.

### GENERAL

In a first aspect, the invention provides a method for use in a smart card reader for enabling communication with a smart card coupled to said smart card reader, the method comprising: receiving from a first computing device a command for said smart card that was generated by a cryptographic service provider application of said first computing device or by a smart card reader driver of said first computing device; identifying that said smart card has an open communication session with a second computing device; and transmitting said command to said second computing device for handling by said smart card over said open communication session.

In a second aspect, the invention provides a method for use in a second computing device having an open communication session with a smart card that is coupled to a smart card reader, the method comprising: receiving from said smart card reader a command for said smart card that was generated by a cryptographic service provider application of a first computing device or by a smart card reader driver of said first computing device; and causing a cryptographic service provider application of said second computing device to transmit said command to said smart card reader over said open communication session.

In a third aspect, the invention provides a computer-readable medium having computer-executable instructions for causing a smart card reader to perform the method of one of the first or second aspects.

In a fourth aspect, the invention provides a computing device comprising: a communication interface through which said computing device is able to communicate with a smart card reader; a processor coupled to said communication interface; and a memory coupled to said processor, said memory arranged to store a cryptographic service provider application through which said computing device is able to maintain an open communication session with a smart card coupled to said smart card reader, and arranged to store executable code means arranged to route communication between another computerized device and said smart card via said cryptographic service provider application.

In a fifth aspect, the invention provides a smart card reader for enabling communication with a smart card coupled to said smart card reader, the smart card reader comprising: means for identifying that said smart card has an open communication session with a second computing device; and means for routing communication between said smart card and a first computing device via said second computing device.

A Cryptographic Service Provider (CSP) application running in a computing device is traditionally designed to create a continuous open communication session with a smart card. The problem to be solved is that if a computing device maintains a communication session with a smart card via a smart card reader, no other computing device is able to communicate with the smart card via the smart card reader as long as the communication session is in place.

To address this problem, executable code in the smart card reader and a Command Proxy Application (CPA) in a computing device that has an open communication session with the smart card may cooperate to enable another computing device to communicate with the smart card over the open communication session.

If the smart card reader receives a command for the smart card from a first computing device, it may check whether the smart card is already involved in a communication session with a second computing device. If so, the smart card reader may send the command to the computing second device, where the command is received by the CPA. The CPA may pass the command to the CSP application, which can interact with the smart card reader over the open communication session. After the CSP application receives a response from the smart card over the open communication session, it may pass the response to the CPA. The CPA may then communicate the response to the smart card reader that in turn communicates the response to the first computing device.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a schematic diagram of an exemplary system comprising computing devices, a smart card reader and a smart card, according to some embodiments of the invention;

Figure 2 is a block diagram of an exemplary computing device, according to some embodiments of the invention;

Figure 3 is a block diagram of an exemplary smart card reader, according to some embodiments of the invention; and

Figure 4 is a flowchart of an exemplary method to enable communications with a smart card coupled to a smart card reader, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

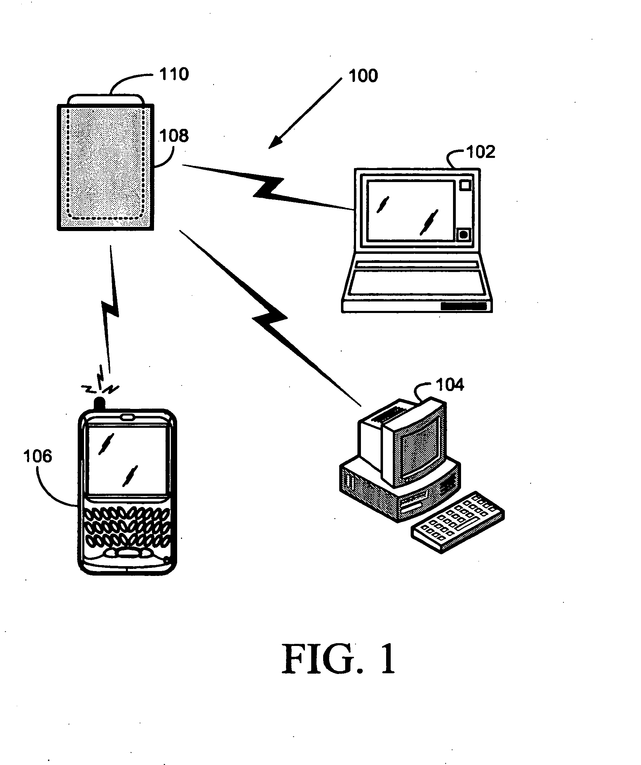

Figure 1 is a schematic diagram of an exemplary system 100 comprising computing devices 102, 104 and 106, a SCR 108 and a SC 110, according to some embodiments of the invention. SC 110 is shown inserted into SCR 108. Embodiments of the invention are applicable to any computing device, whether stationary or mobile, that is able to communicate with a SCR. For example, the communication may be possible via a wired, wireless or optical communication means.

A non-exhaustive list of examples for computing devices 102, 104 and 106 includes any of the following computing devices, for example, notebook computers, laptop computers, mobile computers, mobile terminals, pocket computers, desktop personal computers, personal digital assistants (PDAs), handheld computers, cellular telephones, MP3 players, and the like.

Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g. a private decryption key, a private signing key, biometrics, an authentication certificate, etc.), and may include a decryption engine, e.g., a processor and/or dedicated logic, for example dedicated decryption logic and/or dedicated signing logic. A smart card may include a connector for powering the semiconductor device and performing serial communication with an external device. A smart card may be used for visual identification, time cards, door access, and the like.

Although Figure 1 shows smart card 110 inserted into with SCR 108, embodiments of this invention are equally applicable to contactless smart cards that communicate with their smart card readers via other means, for example, using radio frequency identification (RFID) technology.

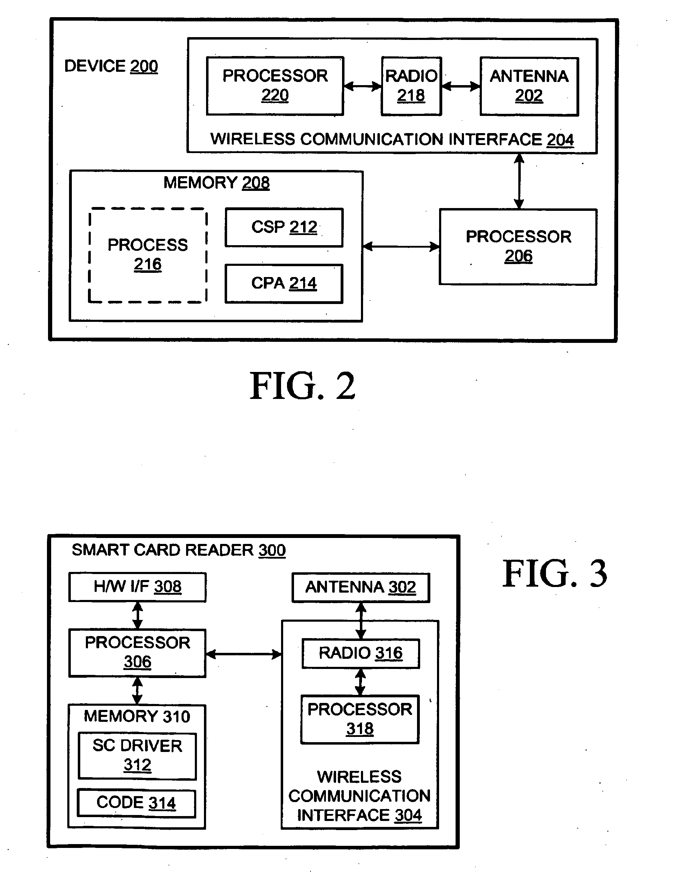

Figure 2 is a block diagram of an exemplary computing device 200, according to some embodiments of the invention. Computing devices 102, 104 and 106 are all examples of computing device 200.

Computing device 200 comprises a communication interface 204, a processor 206 coupled to communication interface 204 and a memory 208 coupled to processor 206. Memory 208 may be fixed in or removable from computing device 200. Processor 206 and memory 208 may be part of the same integrated circuit or in separate integrated circuits.

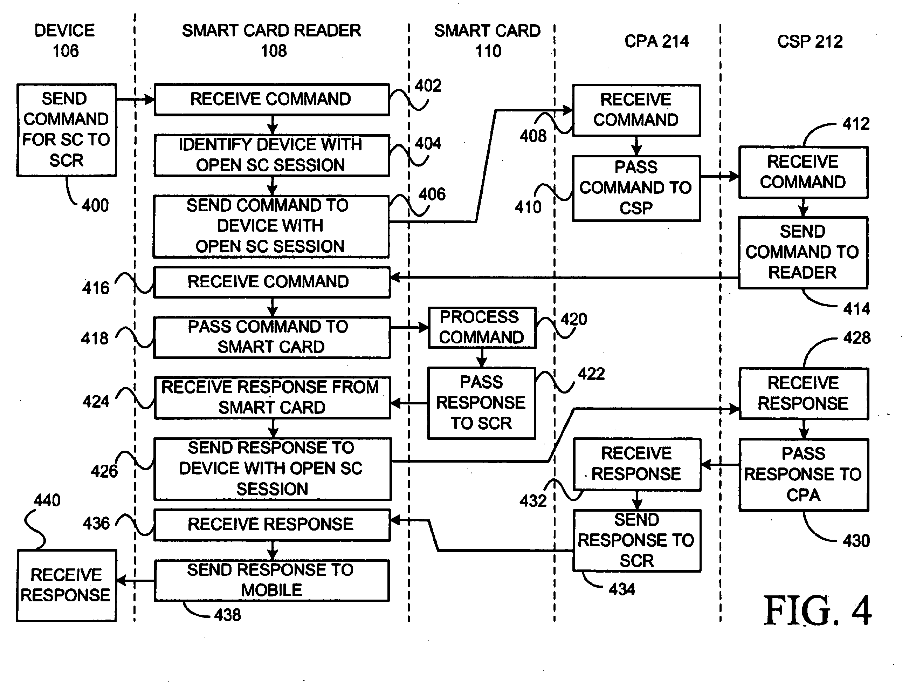

Memory 208 stores CSP executable code 212 and CPA executable code 214 according to embodiments of the invention, which, when executed by processor 206, causes computing device 200 to perform its part in the method of Figure 4. CSP 212, when executed by processor 206, functions as a SCR driver. CSP 212 and CPA 214 may be separate executable code or alternatively, one of them may be partly or fully embedded in the other. Memory 208 may optionally store a process 216 that can interact with a smart card via CSP 212.

In the example shown in Figure 2, communication interface 204 is a wireless communication interface 204 and computing device 200 also comprises an antenna 202. Wireless communication interface 204 comprises a radio 218 coupled to antenna 202, and a processor 220 coupled to radio 218. Wireless communication interface 204 and processor 206 may be part of the same integrated circuit or in separate integrated circuits.

Figure 3 is a block diagram of an exemplary SCR 300, according to some embodiments of the invention. SCR 108 is an example of SCR 300.

SCR 300 includes a communication interface 304, a processor 306 coupled to wireless communication interface 304, a hardware interface 308, and a memory 310 coupled to processor 306. For example, hardware interface 308 is a connector that mates to a corresponding connector with contact pins on a smart card. Memory 310 may be fixed in or removable from smart card reader 300. Memory 310 may be embedded or partially embedded in processor 306.

Memory 310 stores executable code 312 that functions as a smart card driver when executed by processor 306. Memory 310 also stores executable code 314 which, when executed by processor 306, causes smart card reader 300 to perform its part in the method of Figure 4.

Processor 306 and memory 310 may be part of the same integrated circuit or in separate integrated circuits.

In the example shown in Figure 3, communication interface 304 is a wireless communication interface 304 and SCR 300 also comprises an antenna 302. Wireless communication interface 304 comprises a radio 316 coupled to antenna 302, and a processor 318 coupled to radio 316. Wireless communication interface 304 and processor 306 may be part of the same integrated circuit or in separate integrated circuits.

A non-exhaustive list of examples for antennae 202 and 302 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples of communication protocols with which communication interfaces 204 and 304 may be compatible includes Bluetooth®, ZigBee™, radio frequency identification (RFID), ultra wideband (UWB), IEEE 802.11, and proprietary communication protocols.

A non-exhaustive list of examples for processors 206, 220, 306 and 318 includes a central processing unit (CPU), a digital signal processor (DSP), a reduced instruction set computer (RISC), a complex instruction set computer (CISC) and the like. Furthermore, processors 206, 218, 306 and 318 may be part of application specific integrated circuits (ASICs) or may be a part of application specific standard products (ASSPs).

A non-exhaustive list of examples for memories 208 and 310 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Computing device 200 and SCR 300 include additional components which are not shown in Figures 2 and 3 and which, for clarity, are not described herein.

Figure 4 is a flowchart of an exemplary method to enable communications with a SC coupled to a SCR, according to some embodiments of the invention. For the simplicity of the explanation, while the method of Figure 4 is performed, computing devices 102, 104 and 106 are assumed to have respective secured communication channels established with SCR 108, and computing device 104 is assumed to have an open communication session with smart card 110.

At 400, computing device 106 attempts to interact with SC 110 by sending to SCR 108 a command for SC 110. At 402, SCR 108 receives the command. At 404, SCR 108 checks whether SC 110 is involved in an open communication session, and finds that SC 110 is involved in an open communication session with computing device 104.

Due to the open communication session, SCR 108 cannot pass the command directly to SC 110. Instead, at 406, SCR 108 sends the command to the computing device having the open communication session with SC 110, i.e. computing device 104. At 408, the command is received by computing device 104 and communicated to CPA 214 of computing device 104. At 410, CPA 216 passes the command to CSP 212 and at 412, CSP 212 receives the command. At 414, CSP 212 sends the command to SCR 108.

At 416, SCR 108 receives the command from computing device 104 over the open communication session, and SCR 108 passes the command to SC 110 at 418 over the open communication session. At 420, SC 110 receives and processes the command and at 422, SC 110 passes a response to SCR 108 over the open communication session. SCR 108 receives the response from SC 110 at 424, and SCR 108 sends the response at 426 to computing device 104 over the open communication session.

At 428, CSP 212 of computing device 104 receives the response from SCR 108 and at 430, CSP 212 pass the response to CPA 214. At 432, CPA 214 sends the response to SCR 108 and at 434 SCR 108 receives the response. At 438, SCR 108 sends the response to computing device 106 that receives it at 440.

Computer-executable instructions for performing any portions of the above-described method may be stored on a form of computer readable media. Computer readable media includes volatile and nonvolatile, removable and non-removable media implemented in any method or technology for storage of information such as computer readable instructions, data structures, program modules or other data. Computer readable media includes, but is not limited to, random access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium which can be used to store the desired instructions and which can be accessed by computing device 104 and/or SCR 108, including by internet or other computer network forms of access.
Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for use in a smart card reader (108, 300) for enabling communication with a smart card (110) coupled to said smart card reader (108, 300), the method comprising:
receiving from a first computing device (106) a command for said smart card (110) that was generated by a cryptographic service provider application of said first computing device (106) or by a smart card reader driver of said first computing device (106);
identifying that said smart card (110) has an open communication session with a second computing device (104, 200); and
transmitting said command to said second computing device (104, 200) for handling by said smart card (110) over said open communication session.

2. The method of claim 1, further comprising:
receiving said command from said second computing device (104, 200) over said open communication session; and
passing said command to said smart card (110) over said open communication session.

3. The method of claim 2, further comprising:
receiving a response to said command from said smart card (110) over said open communication session; and
transmitting said response to said second computing device (104, 200) over said open communication session for further transmission from said second computing device (104, 200) to said smart card reader (108, 300).

4. The method of claim 3, further comprising:
receiving said response from said second computing device (104, 200); and
transmitting said response to said first computing device (106).

5. A method for use in a second computing device (104, 200) having an open communication session with a smart card (110) that is coupled to a smart card reader (108, 300), the method comprising:
receiving from said smart card reader (108, 300) a command for said smart card (110) that was generated by a cryptographic service provider application of a first computing device (106)or by a smart card reader driver of said first computing device (106); and
causing a cryptographic service provider application of said second computing device (104, 200) to transmit said command to said smart card reader (108, 300) over said open communication session.

6. The method of claim 5, further comprising:
receiving a response to said command from said smart card reader (108, 300) over said open communication session; and
transmitting said response to said smart card reader (108, 300) for further transmission to said first computing device (106).

7. A computer-readable medium having computer-executable instructions (314) for causing a smart card reader (108, 300) to perform the method of any one of claims 1 to 4.

8. A computer-readable medium having computer-executable instructions (212, 214) for causing a computing device to perform the method of claim 5 or claim 6.

9. A computing device (104, 200) comprising:
a communication interface (204) through which said computing device (200) is able to communicate with a smart card reader (108, 300);
a processor (206) coupled to said communication interface (204); and
a memory (208) coupled to said processor (206), said memory (208) arranged to store a cryptographic service provider application (212) through which said computing device (200) is able to maintain an open communication session with a smart card (110) coupled to said smart card reader (108, 300), and arranged to store executable code means (214) arranged to receive from said smart card reader (108, 300) a command for said smart card (110) generated by another computing device (106) and to route communication between said another computing device (106) and said smart card (110) via said cryptographic service provider application (212) over said open communication session.

10. The computing device (104, 200) of claim 9, wherein said communication interface (204) comprises a wireless communication interface (204).

11. A smart card reader (108, 300) for enabling communication with a smart card (110) coupled to said smart card reader (108, 300), the smart card reader (108, 300) comprising: means for receiving from a first computing device (106) a command for said smart card (110);
means for identifying that said smart card (110) has an open communication session with a second computing device (104, 200); and
means for routing communication between said smart card (110) and said first computing device (106) via said second computing device (104, 200).

12. A system comprising the smart card reader (108, 300) of claim 11 and the computing device (104, 200) of claim 9 or claim 10, the computing device being able to maintain an open communication session with a smart card (110) coupled to said smart card reader (108, 300), and to route communication between another computing device (106) and said smart card (110) via a cryptographic service provider application (212).

## Patentansprüche

1. Verfahren zur Nutzung in einem Chipkartenlesegerät (108, 300) zur Ermöglichung der Kommunikation mit einer Chipkarte (110), die mit dem Chipkartenlesegerät (108, 300) gekoppelt ist, das Verfahren umfassend:
das Empfangen eines Befehls für die Chipkarte (110) von einem ersten Computergerät (106), der durch eine Verschlüsselungsdienstanbieteranwendung des ersten Computergeräts (106) oder durch einen Chipkartenlesegerättreiber des ersten Computergeräts (106) erzeugt wurde;
das Erkennen, dass die Chipkarte (110) eine offene Kommunikationssitzung mit einem zweiten Computergerät (104, 200) hat; und
das Übertragen des Befehls zu dem zweiten Computergerät (104, 200) zur Behandlung durch die Chipkarte (110) über die offene Kommunikationssitzung.

2. Verfahren gemäß Anspruch 1, des Weiteren umfassend:
das Empfangen des Befehls von dem zweiten Computergerät (104, 200) über die offene Kommunikationssitzung; und
das Übergeben des Befehls an die Chipkarte (110) über die offene Kommunikationssitzung.

3. Verfahren gemäß Anspruch 2, des Weiteren umfassend:
das Empfangen einer Antwort auf den Befehl von der Chipkarte (110) über die offene Kommunikationssitzung; und
das Übertragen der Antwort an das zweite Computergerät (104, 200) über die offene Kommunikationssitzung zur weiteren Übertragung von dem zweiten Computergerät (104, 200) zu dem Chipkartenlesegerät (108, 300).

4. Verfahren gemäß Anspruch 3, des Weiteren umfassend:
das Empfangen der Antwort von dem zweiten Computergerät (104, 200) und
das Übertragen der Antwort zu dem ersten Computergerät (106).

5. Verfahren zur Nutzung in einem zweiten Computergerät (104, 200), das eine offene Kommunikationssitzung mit einer Chipkarte (110) hat, die mit einem Chipkartenlesegerät (108, 300) gekoppelt ist, das Verfahren umfassend:
das Empfangen eines Befehls für die Chipkarte (110) von dem Chipkartenlesegerät (108. 300), der durch eine Verschlüsselungsdienstanbieteranwendung eines ersten Computergeräts (106) oder durch einen Chipkartenlesegerättreiber des ersten Computergeräts (106) erzeugt wurde; und
das Bewirken, dass eine Verschlüsselungsdienstanbieteranwendung des zweiten Computergeräts (104, 200) den Befehl über die offene Kommunikationssitzung zu dem Chipkartenlesegerät (108, 300) überträgt.

6. Verfahren gemäß Anspruch 5, des Weiteren umfassend:
das Empfangen einer Antwort auf den Befehl von dem Chipkartenlesegerät (108, 300) über die offene Kommunikationssitzung; und
das Übertragen der Antwort zu dem Chipkartenlesegerät (108, 300) zur weiteren Übertragung zu dem ersten Computergerät (106).

7. Computerlesbares Medium mit computerausführbaren Anweisungen (314), um zu bewirken, dass ein Chipkartenlesegerät (108, 300) das Verfahren gemäß einem der Ansprüche 1 bis 4 durchführt.

8. Computerlesbares Medium mit computerausführbaren Anweisungen (212, 214), um zu bewirken, dass ein Computergerät das Verfahren gemäß Anspruch 5 oder Anspruch 6 durchführt.

9. Computergerät (104, 200), umfassend:
eine Kommunikationsschnittstelle (204) über die das Computergerät (200) mit einem Chipkartenlesegerät (108, 300) kommunizieren kann;
einen mit der Kommunikationsschnittstelle (204) gekoppelten Prozessor (206); und
einen mit dem Prozessor (206) gekoppelten Speicher (208), wobei der Speicher (208) dazu eingerichtet ist, eine Verschlüsselungsdienstanbieteranwendung (212) zu speichern, über die das Computergerät (200) in der Lage ist, eine offene Kommunikationssitzung mit einer Chipkarte (110) aufrechtzuerhalten, die mit dem Chipkartenlesegerät (108, 300) gekoppelt ist, und der dazu eingerichtet ist, ausführbare Codemittel (214) zu speichern, welche dazu eingerichtet sind, von dem Chipkartenlesegerät (108, 300) einen Befehl für die Chipkarte (110) zu empfangen, der durch ein anderes Computergerät (106) erzeugt wurde, und die Kommunikation zwischen dem anderen Computergerät (106) und der Chipkarte (110) über die Verschlüsselungsdienstanbieteranwendung (212) über die offene Kommunikationssitzung zu lenken.

10. Computergerät (104, 200) gemäß Anspruch 9, wobei die Kommunikationsschnittstelle (204) eine Drahtloskommunikationsschnittstelle (204) umfasst.

11. Chipkartenlesegerät (108, 300) zur Ermöglichung der Kommunikation mit einer Chipkarte (110), die mit dem Chipkartenlesegerät (108, 300) gekoppelt ist, das Chipkartenlesegerät (108, 300) umfassend:
Mittel zum Empfangen eines Befehls für die Chipkarte (110) von einem ersten Computergerät (106);
Mittel zum Erkennen, dass die Chipkarte (110) eine offene Kommunikationssitzung mit einem zweiten Computergerät (104, 200) hat; und
Mittel zum Lenken der Kommunikation zwischen der Chipkarte (110) und dem ersten Computergerät (106) über das zweite Computergerät (104, 200).

12. System, umfassend das Chipkartenlesegerät (108, 300) gemäß Anspruch 11 und das Computergerät (104, 200) gemäß Anspruch 9 oder Anspruch 10, wobei das Computergerät in der Lage ist, eine offene Kommunikationssitzung mit einer Chipkarte (110) aufrechtzuerhalten, die mit dem Chipkartenlesegerät (108, 300) gekoppelt ist, und die Kommunikation zwischen einem anderen Computergerät (106) und der Chipkarte (110) über eine Verschlüsselungsdienstanbieteranwendung (212) zu lenken.

## Revendications

1. Un procédé destiné à une utilisation sur un lecteur de cartes à puce (108, 300) de façon à établir une communication avec une carte à puce (110) couplée audit lecteur de cartes à puce (108, 300), le procédé comprenant :
la réception à partir d'un premier dispositif informatique (106) d'une commande pour ladite carte à puce (110) qui a été générée par une application de fournisseur de services de cryptographie dudit premier dispositif informatique (106) ou par un pilote de lecteur de cartes à puce dudit premier dispositif informatique (106),
l'identification que ladite carte à puce (110) possède une session de communication ouverte avec un deuxième dispositif informatique (104, 200), et
la transmission de ladite commande audit deuxième dispositif informatique (104, 200) pour traitement par ladite carte à puce (110) par l'intermédiaire de ladite session de communication ouverte.

2. Le procédé selon la revendication 1, comprenant en outre :
la réception de ladite commande provenant dudit deuxième dispositif informatique (104, 200) par l'intermédiaire de ladite session de communication ouverte, et
la transmission de ladite commande à ladite carte à puce (110) par l'intermédiaire de ladite session de communication ouverte.

3. Le procédé selon la revendication 2, comprenant en outre :
la réception d'une réponse à ladite commande provenant de ladite carte à puce (110) par l'intermédiaire de ladite session de communication ouverte, et
la transmission de ladite réponse audit deuxième dispositif informatique (104, 200) par l'intermédiaire de ladite session de communication ouverte pour transmission ultérieure dudit deuxième dispositif informatique (104, 200) vers ledit lecteur de cartes à puce (108, 300).

4. Le procédé selon la revendication 3, comprenant en outre :
la réception de ladite réponse provenant dudit deuxième dispositif informatique (104, 200), et
la transmission de ladite réponse audit premier dispositif informatique (106).

5. Un procédé destiné à une utilisation sur un deuxième dispositif informatique (104, 200) possédant une session de communication ouverte avec une carte à puce (110) qui est couplée à un lecteur de cartes à puce (108, 300), le procédé comprenant :
la réception à partir dudit lecteur de cartes à puce (108, 300) d'une commande pour ladite carte à puce (110) qui a été générée par une application de fournisseur de services de cryptographie d'un premier dispositif informatique (106) ou par un pilote de lecteur de cartes à puce dudit premier dispositif informatique (106), et
l'opération consistant à amener une application de fournisseur de services de cryptographie dudit deuxième dispositif informatique (104, 200) à transmettre ladite commande audit lecteur de cartes à puce (108, 300) par l'intermédiaire de ladite session de communication ouverte.

6. Le procédé selon la revendication 5, comprenant en outre :
la réception d'une réponse à ladite commande provenant dudit lecteur de cartes à puce (108, 300) par l'intermédiaire de ladite session de communication ouverte, et
la transmission de ladite réponse audit lecteur de cartes à puce (108, 300) pour transmission ultérieure audit premier dispositif informatique (106).

7. Un support lisible par ordinateur possédant des instructions exécutables par ordinateur (314) destinées à amener un lecteur de cartes à puce (108, 300) à exécuter le procédé selon l'une quelconque des revendications 1 à 4.

8. Un support lisible par ordinateur possédant des instructions exécutables par ordinateur (212, 214) destinées à amener un dispositif informatique à exécuter le procédé selon la revendication 5 ou 6.

9. Un dispositif informatique (104, 200) comprenant :
une interface de communication (204) par l'intermédiaire de laquelle ledit dispositif informatique (200) est capable de communiquer avec un lecteur de cartes à puce (108,300),
un processeur (206) couplé à ladite interface de communication (204), et
une mémoire (208) couplée audit processeur (206), ladite mémoire (208) étant agencée de façon à conserver en mémoire une application de fournisseur de services de cryptographie (212) par l'intermédiaire de laquelle ledit dispositif informatique (200) est capable de maintenir une session de communication ouverte avec une carte à puce (110) couplée audit lecteur de cartes à puce (108, 300), et agencée de façon à conserver en mémoire du code exécutable (214) agencé de façon à recevoir dudit lecteur de cartes à puce (108, 300) une commande pour ladite carte à puce (110) générée par un autre dispositif informatique (106) et de façon à acheminer une communication entre ledit un autre dispositif informatique (106) et ladite carte à puce (110) via ladite application de fournisseur de services de cryptographie (212) par l'intermédiaire de ladite session de communication ouverte.

10. Le dispositif informatique (104, 200) selon la revendication 9 où l'interface de communication (204) comprend une interface de communication sans fil (204).

11. Un lecteur de cartes à puce (108, 300) destiné à établir une communication avec une carte à puce (110) couplée audit lecteur de cartes à puce (108, 300), le lecteur de cartes à puce (108, 300) comprenant :
un moyen de recevoir à partir d'un premier dispositif informatique (106) une commande pour ladite carte à puce (110),
un moyen d'identifier que ladite carte à puce (110) possède une session de communication ouverte avec un deuxième dispositif informatique (104, 200), et
un moyen d'acheminer une communication entre ladite carte à puce (110) et ledit premier dispositif informatique (106) via ledit deuxième dispositif informatique (104, 200).

12. Un système comprenant le lecteur de cartes à puce (108, 300) selon la revendication 11 et le dispositif informatique (104, 200) selon la revendication 9 ou 10, le dispositif informatique étant capable de maintenir une session de communication ouverte avec une carte à puce (110) couplée audit lecteur de cartes à puce (108, 300) et d'acheminer une communication entre un autre dispositif informatique (106) et ladite carte à puce (110) via une application de fournisseur de services de cryptographie (212).
